(19) Europäisches Patentamt
European Patent Office
Office européen des brevets

(11) EP 0 546 314 B1

(12) EUROPÄISCHE PATENTSCHRIFT

(45) Veröffentlichungstag und Bekanntmachung des Hinweises auf die Patenterteilung:
**15.05.1996 Patentblatt 1996/20**

(51) Int. Cl.$^6$: **B01D 53/34**, A62D 3/00

(21) Anmeldenummer: **92118797.7**

(22) Anmeldetag: **03.11.1992**

# (54) Verfahren zum Entfernen von halogenierten organischen Verbindungen aus Abgasen

Method for removing halogenated organic compounds from flue gases

Procédé pour l'élimination des composés organiques halogénés des gas de fumée

(84) Benannte Vertragsstaaten:
**AT BE CH DE DK ES FR GB GR IT LI LU MC NL PT SE**

(30) Priorität: **27.11.1991 DE 4138876**
**27.03.1992 DE 4210055**

(43) Veröffentlichungstag der Anmeldung:
**16.06.1993 Patentblatt 1993/24**

(73) Patentinhaber: **DEGUSSA AG**
**D-60311 Frankfurt (DE)**

(72) Erfinder:
- **von Wedel, Wedigo, Dr.**
  **F-75007 Paris (FR)**
- **Bilger, Edgar, Dr.**
  **W-6467 Hasselroth 3 (DE)**
- **Barenschee, Ernst-Robert, Dr.**
  **W-6450 Hanau 6 (DE)**
- **Tarabocchia, John**
  **W-6382 Friedrichsdorf (DE)**

(56) Entgegenhaltungen:
**EP-A- 0 487 834**
**DE-A- 2 926 176**
**FR-A- 2 213 238**

- **WASTE MANAGEMENT Bd. 11, Nr. 3, 1991, NEW YORK Seiten 125 - 133 T.PICCINNO ET AL 'Wet Oxidation by Hydrogen Peroxide for the Treatment of Mixed Radioactive and Toxic Organic Wastes and Waste Waters'**

EP 0 546 314 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.11.7/3.4

## Beschreibung

Die Erfindung betrifft ein Verfahren zum Entfernen von halogenierten organischen Verbindungen aus gegebenenfalls $NO_x$-enthaltenden Abgasen, insbesondere Abgasen von Müllverbrennungsanlagen.

Abgase aus Müllverbrennungsanlagen enthalten neben $NO_x$ (durchschnittlich 200 ppm) und Rest $SO_2$ (durchschnittlich 10 - 20 mg/$Nm^3$ ≙ 3 bis 7 pm) chlorierte Dibenzodioxine und chlorierte Dibenzofurane in einer Größenordnung von ca. 2 bis 10 ng TE/$m^3$ (Toxizitätsequivalente).

Der Gesetzgeber schreibt ab 1996 in der 17. Verordnung zum Bundesemissionsschutzgesetz einen Grenzwert von 0,1 ng TE/$Nm^3$ vor.

In der öffentlichen Diskussion wird die thermische Abfallbehandlung (Müllverbrennung) als eine Emissionsquelle, von der eine unverhältnismäßig hohe Umweltbelastung, insbesondere wegen der Dioxin-Emissionen, ausgeht, angesehen.

Die Abgase der Müllverbrennung werden über Adsorptionsanlagen geleitet, wobei die umweltschädlichen Stoffe aus dem Abgas entfernt werden.

Es ist bekannt, in den Adsorptionsanlagen als Adsorptionsmittel Aktivkohlenkoks oder Aktivkohle einzusetzen. Das Abgas wird dabei durch eine Feststoffschüttung mit einer Anströmgeschwindigkeit zwischen 0,1 und 0,3 m/s geleitet (VDI-Bildungswerk 780, Seite 12). Eine andere Möglichkeit, die jedoch auf relativ niedrige Strömungsgeschwindigkeiten begrenzt ist, besteht darin, einen Aktivkohlefilter nach dem Kreuzstromprinzip zu verwenden (VDI-Bildungswerk 972, Seite 2).

Ein Nachteil in der Verwendung von Aktivkohle besteht darin, daß, wenn in dem Abgas Sauerstoff vorhanden ist, die Aktivkohle sich bei erhöhter Temperatur entzünden kann und die Adsorptionsleistung vermindert wird. Im Extremfall kann es dabei zu einer totalen Verbrennung des Aktivkohlefilters kommen.

Es bestand somit die Aufgabe, ein Verfahren zum Entfernen von halogenierten organischen Verbindungen aus gegebenenfalls $NO_x$-enthaltenden, insbesondere Abgasen von Müllverbrennungsanlagen zu entwickeln, das diese Nachteile nicht aufweist.

Gegenstand der Erfindung ist ein Verfahren zum Entfernen von halogenierten organischen Verbindungen aus gegebenenfalls $NO_x$ enthaltenden Abgasen, welches dadurch gekennzeichnet ist, daß man das Abgas über ein Festbett oder ein Wirbelbett leitet und mit Caro'scher Säure oder einem ihrer Salze in Kontakt bringt.

In einer Ausführungsform der Erfindung kann man das Abgas gegebenenfalls mit $SO_2$ ergänzen, über ein Festbett oder ein Wirbelbett eines Feststoffes leiten und mit $H_2O_2$ in Kontakt bringen.

Der Anteil an $SO_2$ wird dann zugesetzt, wenn das Ausgangsabgas kein oder nur wenig $SO_2$ enthält.

In einer Ausführungsform der Erfindung kann man neben $H_2O_2$ auch Caro'sche Säure einsetzen.

Das Abgas kann dabei über ein Festbett oder ein Wirbelbett eines Feststoffes geleitet werden, wobei ein wäßriges Gemisch aus $H_2O_2$ und $H_2SO_4$ auf den Feststoff aufgedüst wird.

In einer Ausführungsform der Erfindung kann man den Feststoff vor der Einbindung in den Abgasstrom mit $H_2SO_4$ imprägnieren und $H_2O_2$ aufbringen.

In einer weiteren Ausführungsform der Erfindung kann man den Feststoff vor der Einbindung in den Abgasstrom mit $H_2O_2$ imprägnieren und $H_2SO_4$ aufbringen.

In einer weiteren Ausführungsform der Erfindung kann man den Feststoff vor der Einbindung in den Abgasstrom mit Caro'scher Säure oder mit einer wäßrigen Lösung ihres Salzes imprägnieren. Ebenso kann man den Feststoff vor der Einbindung in den Abgasstrom mit Caro'scher Säure oder mit einer wäßrigen Lösung ihres Salzes besprühen.

Als Feststoff können folgende als feinteilige, granulierte, tablettierte oder zu beliebigen Formkörpern, eingeschlossen Wabenkörpern, verformte oder auf wabenförmige Träger aufgebrachte Stoffe allein oder in Mischung eingesetzt werden:

- Kieselgele, Fällungskieselsäuren, pyrogene Kieselsäuren, gegebenenfalls in hydrophobierter Form;
- weit- oder mittelporige natürliche oder synthetische Zeolithe;
- Phyllosilikate;
- Aluminiumoxid;
- Diatomeenerde;
- Titandioxid;
- natürliche oder synthetische Schichtssilikate;

Experimentell näher überprüfte Feststoffe werden nachfolgend näher gekennzeichnet:
Aerosil 200 (pyrogene amorphe Kieselsäure), Tabletten 6 x 5,5 mm (Entwicklungsprodukt aus Handelsprodukt Aerosil 200 der Fa. Degussa, Frankfurt);
Weitporiger 12-Ring-Zeolith, dealuminierter y-Zeolith (Porenweite 7,4 Å, Modul 200 (Si/Al = 100));
Die erfindungsgemäßen Feststoffe weisen den Vorteil auf, daß sie nicht brennbar sind. Sie sind temperaturstabil bis 900 °C. Sie sind regenerierbar, wobei verbleibende Dioxine beispielsweise mittels dem Fentons-Reagenz ($H_2O_2$ + FeII- oder FeIII-Salze) oder mittels einer anderen bekannten chemischen Reaktion oder thermisch vollständig zerstört werden können. Der überwiegende Anteil der Dioxine wird bei dem erfindungsgemäßen Verfahren unmittelbar auf dem Feststoff zerstört.

Die Menge an $H_2O_2$ bzw. an Caro'scher Säure richtet sich nach der Menge an Dioxin, die zerstört werden soll. Es soll eine möglichst quantitative Zerstörung des Dioxins erreicht werden.

Das $H_2O_2$ wird zugesetzt als eine wäßrige Lösung mit einem Gehalt an $H_2O_2$ von 30 bis 90 Gew.-%, vorzugsweise 50 %.

Falls das Abgas kein $SO_2$ enthält, kann dem Abgas $SO_2$ in einer Menge von 0,01 bis > 10.000 ppm zugesetzt werden.

Das Festbett kann mit $H_2SO_4$ in einer Menge bis zur Sättigung des Feststoffes imprägniert werden.

Das Festbett kann mit $H_2O_2$ in einer Konzentration von 1 bis 90 Gew.-% und in einer Menge bis zur Sättigung des Feststoffes imprägniert werden.

In den Abgasstrom kann eine wäßrige Lösung von $H_2SO_4$ in einer Konzentration von 10 bis 98 Gew.-% und in einer Menge von 0,01 bis 10 $g/m^3 \cdot s^{-1}$ eingebracht werden.

Erfindungsgemäß wesentlich scheint zu sein, daß neben $H_2SO_4$ auch $H_2O_2$ in einer Reaktionszone vorhanden ist. Die daraus intermediär gebildete Caro'sche-Säure scheint das eigentliche Agens zu sein. Die Abgastemperatur sollte gegebenenfalls oberhalb des Taupunktes, der sich aus dem Wassergehalt des Abgases ergibt, liegen. Dies ist notwendig, um eine Kondensation von Wasser auf dem Festbett, die zur unerwünschten Verdünnung der Säure führen würde, zu verhindern.

Das erfindungsgemäße Verfahren weist die folgenden Vorteile auf:
Zum einen wird ein unbrennbarer Katalysator oder Feststoff verwendet. Zum anderen werden die Dioxine bzw. die chlorierten organischen Verbindungen nicht nur an dem Feststoff adsorbiert, sondern auch dort zu nahezu 100 % zerstört.

## Beispiele

In einem Langzeitversuch zur Entstickung eines Abgases aus einer Müllverbrennungsanlage wurden parallel Dioxinmessungen durchgeführt:
Ziel war, das Verhalten der polychlorierten Dibenzodioxine und -furane unter den stark oxidierenden Bedingungen (Zerstörung oder Adsorption am Katalysator) zu untersuchen. Dazu wurde die Versuchsanlage über einen Zeitraum von 10 Tagen kontinuierlich im 24-h-Schichtbetrieb betrieben. Nach 7 Tagen Dauerbetrieb begann die eigentliche Dioxinmessung. Dazu wurden an drei aufeinanderfolgenden Tagen jeweils vor und hinter dem Katalysator über einen Zeitraum von jeweils 6 h Gasproben genommen. Am Versuchsende wurden ebenfalls Proben des Katalysators genommen.

Als Feststoff wurden $SiO_2$-Tabletten eingesetzt, die aus dem pyrogen hergestellten Siliciumdioxid Aerosil 200 geformt wurden.

Dabei wurden die folgenden Bedingungen eingehalten:

| | |
|---|---|
| Reaktordurchmesser | 300 mm |
| Schütthöhe des Festbettes | 400 mm |
| Material: Aerosil 200 Tabletten | 6 x 5 mm |
| Volumen des Festbettes | 28 - 30 l |
| Schüttdichte ca. | 0,5 kg/l |
| Temperatur am Reaktoreingang | 69 - 70 °C |
| Temperatur am Reaktorausgang | 69 °C |
| Taupunkt des Gases ca. | 60 °C |
| Druckverlust ca. | 110 mm Wassersäule |
| Lineare Gasgeschwindigkeit im Reaktor | 0,6 - 0,7 m/s |
| Gasdurchsatz ca. | 160 $m^3/h$ ≙ ca. 130 $Nm^3/h$ feuchtes Gas |
| | ≙ ca. 104 $Nm^3/h$ trockenes Gas |
| $H_2O_2$-Dosiermenge (50 %ig) | 1 ml/min. |
| Ø $SO_2$-Gehalt im Rohgas | ca. 5 - 15 $mg/Nm^3$ |
| Versuchsdauer | 10 Tage |

Massenbilanz

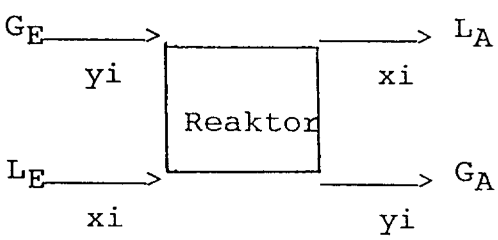


L = Flüssigkeitsströme
G = Gasströme
E = Eingang
A = Ausgang
xi = Konzentration der Komponente i in der Flüssig phase
yi = Konzentration der Komponente i in der Gasphase

Die Probeentnahmestellen können der Figur 1 entnommen werden.

Die Ergebnisse der Messungen sind in den Tabellen 1 bis 9 dargestellt. Die Tabelle 10 zeigt Meßergebnisse, die bei einem Verfahren gemäß dem Stand der Technik erhalten wurden.

Die in den Beispielen verwandten Abkürzungen haben die folgenden Bedeutungen:

1. 1,2,3,6,7,8-Hexa CDF = 1,2,3,6,7,8-Hexachlordibenzofuran
2. BGA = Bundesgesundheitsamt
3. ng = Nanogramm

4. TE = Toxizitätsequivalente
5. PCDF = perchlorierte Dibenzofurane
6. PCDD = perchlorierte Dibenzodioxine
7. Tetra CDF = Tetrachlordibenzofuran
8. Penta CDF = Pentachlordibenzofuran
9. Hexa CDF = Hexachlordibenzofuran
10. Hepta CDF = Heptachlordibenzofuran
11. Octa CDF = Octachlordibenzofuran
12. Tetra CDD = Tetrachlordibenzodioxin
13. Penta CDD = Pentachlordibenzodioxin
14. Hexa CDD = Hexachlordibenzodioxin
15. Hepta CDD = Heptachlordibenzodioxin
16. Octa CDD = Octachlordibenzodioxin
17. Gef. Stoff. V. = Gefahrstoffverordnung
18. CC MS = Commitee on Challenges of Modern Society
19. NATO = North Atlantic Treaty Organization
20. NWG = Nachweisgrenze
21. Kongenere sind Moleküle gleicher Grundstruktur unterschiedlichen Substitutionsgrades
22. SP-2331= spezielle Säule für Chromatographie (polare Säule auf Basis Siloxan)
23. 1.0134 Pa = Druckangabe in Pascal
24. BGA/UBA = Bundesgesundheitsamt/Umweltbundesamt

Bedingungen

Reaktorfüllung 30 l Aerosil 200 Tabletten (Dichte 0,5 kg/l) = 15 kg
Der Reaktor wird mit 130 $Nm^3/h$ Abgas aus der MVA mit einem Feuchtegehalt von ca. 20 % über 240 Stunden betrieben.

$L_E$ = 50 % $H_2O_2$ + 50 % Wasser, es enthält kein Dioxin

$L_A$ = Kondensat, geringer Volumenstrom, enthält kein Dioxin

Berechnung

1. Gesamtgasmenge (feuchtes Gas)

$$130\ \frac{Nm^3}{h}\ x\ \frac{24\ h}{d}\ x\ 10\ d = 31.200\ Nm^3$$

2. Gesamtgasmenge (trockenes Gas) 31.200 x 0,8 ~ 25.000 $Nm^3$

3. Dioxingehalt des frischen Katalysators = 0

$$Dioxin_{Ein} - Dioxin_{Aus} = Dioxin_{Reaktion} + Dioxin_{Akkumulation}$$

Beispielrechnung für 1,2,3,6,7,8-Hexa CDF (TE = 0,1)

| | |
|---|---|
| Mittelwert Eingangskonzentration absolut | = 3,85 ng/Nm³ |
| Mittelwert Ausgangskonzentration | = 0,07 ng/Nm³ |
| Max.-Konz. auf dem Katalysator (obere Schicht) | = 1,1870 ng/g |
| Mittlere Konz. auf dem Katalysator (Mischprobe) | = 0,099 ng/g |
| $Dioxin_{Ein}$ = 3,85 x 25.000 = 96.250 ng | = 100 % |
| $Dioxin_{Aus}$ = 0,07 x 25.000 = 1.750 ng | = 1,8 % |
| $Dioxin_{Akk.}$, max. 1,1870 x 1.000 $\frac{g}{kg}$ x 15 | = 17.805 ng |
| | = 18,5 % |
| $Dioxin_{Akk.}$ (Mittel) 0,099 x 1.000 x 15 | = 1.485 |
| | = 1,54 % |
| daraus folgt Reaktion zwischen 80 - 97 % für diese Komponente. Die Rechnung wurde für alle Komponenten durchgeführt, s. Tab. 09. | |

Ergebnisse

Der Rohgasstrom weist eine durchschnittliche Dioxinbelastung von 4,19 ng TE(BGA)/Nm³ (3,9 - 4,61) auf.
Die durchschnittliche Reingaskonzentration beträgt 0,014 ng TE(BGA)/Nm³ (0,010 - 0,017)
Die durchschnittliche Dioxinabscheiderate im System beträgt somit 99,67 % (siehe auch Tab. 08).

Auf dem Katalysator finden sich durchschnittlich 0,050 ng TE/g Katalysator, Spitzenwerte in der oberen Katalysatorschicht liegen bei 0,635 ng TE/g Katalysator.

Über den Gasstrom werden ca. 104.750 ng TE eingetragen. Der Austrag beträgt ca. 350 ng TE. Auf dem Katalysator werden ca. 750 ng TE gefunden. Daraus folgt, daß im Durchschnitt 99 % der Dioxine auf dem Katalysator zerstört werden und ca. 0,7 % über einen Zeitraum von 10 Tagen akkumuliert werden.

Im Versuchszeitraum sowie im Dauerbetrieb der Anlage nach dem Versuch wird beobachtet, daß sich auf dem Katalysator Schwefelsäure akkumuliert. Diese Schwefelsäure stammt aus der Reaktion des Rest-$SO_2$ des Rauchgases mit Wasserstoffperoxid. Sie liegt auf dem Katalysator in hochkonzentrierter Form vor, da sie einen deutlich niedrigeren Dampfdruck als Wasser besitzt. Es wird angenommen, daß die Dioxine nicht durch das Wasserstoffperoxid, sondern durch intermediär aus $H_2O_2$ und $H_2SO_4$ gebildete Caro'sche-Säuren oxidiert werden. Es werden für alle Einzelkomponenten Massenbilanzen erstellt. Es zeigt sich, daß bevorzugt die niederchlorierten Dioxine und Furane bis $Cl_6$ oxidativ zerstört werden. Die weniger giftigen hochchlorierten Dioxine und Furane bis $Cl_8$ werden etwas langsamer oxidiert.

Tab. 01

| Beschreibung der Bedingungen der Feststoffprobenahme sowie der jeweiligen Probenahmestellen | | |
|---|---|---|
| Matrix bzw. Entnahmestellenbezeichnung | Zugeordnete Proben-Nr. | Beschreibung |
| $SiO_2$ (Nullprobe) | P 1.1 | Die $SiO_2$-Tabletten wurden betreiberseitig einem Vorratsbehälter entnommen. |
| $SiO_2$ (oberste Schicht) | P 2.1 | Nach Beendigung der drei Abgasprobenahmeserien wurde der Katalysator oben geöffnet und die oberste Schicht des $SiO_2$-Festbettes betreiberseitig entnommen. |
| $SiO_2$ (Mischprobe) | P 2.2 | Die gesamte Katalysatorfüllung wurde nach Beendigung der o.g. Probenahmen und nach Abnahme der obersten Schicht betreiberseitig in ein Gefäß abgelassen und durchmischt. Aus dem Mischgefäß wurde eine Probe genommen. |

Tab. 02: Meß- und Probenahmestellenbeschreibung (technische Daten) für die Abgasprobenahmen

| Lage der Meßstelle im Rauchgasweg | Zugeordnete Proben-Nr. | Kanalquerschnitt[a,b] ($m^2$) | Kantenlängen (m) | Durchmesser (m) | Länge der Einlaufstrecke (m) | Länge der Auslaufstrecke (m) | Entspricht die Probenahmestelle hinsichtlich der Meßstrecke den Anforderungen der VDI-Richtlinie 2066, Blatt 1 ? |
|---|---|---|---|---|---|---|---|
| Rohgas vor Kat | P 3.1-3 | 0,03 (rd) | | 0,1 | 0,1 | 0,1 | nein die Probenahmen erfolgten nicht isokinetisch; die Abgasproben wurden über ein angeflanschtes Glasrohr entnommen |
| Reingas nach Kat | P 4.1-3 | 0,03 (rd) | | 0,1 | 0,2 | 0,2 | nein die Probenahmen erfolgten nicht isokinetisch; die Abgasproben wurden über ein angeflanschtes Glasrohr entnommen |

a quadratisch (qu), rechteckig (re), rund (rd)

Tab. 03

| Übersicht über Probenahmen und Analysen | | | | | | |
|---|---|---|---|---|---|---|
| Matrix | Probenahme-datum | Probenah-mezeitraum | Proben-Nr. | Probenahmev-olumen ($m^3$)[b] | $O_2$-Normierungs-faktor (x % $O_2$ → 11 % $O_2$) | PCDF/D |
| $SiO_2$ (Nullprobe) | 19.09.91 | a | P 1 | | | x |
| $SiO_2$ (oberste Schicht) | 19.09.91 | a | P 2.1 | | | x |
| $SiO_2$ (Mischprobe) | 19.09.91 | a | P 2.2 | | | x |
| Rohgas vor Kat | 17.09.91 | 09.00-15.00 | P 3.1 | 10,136 | 0,98 | x |
| Reingas nach Kat | 17.09.91 | 09.00-15.00 | P 4.1 | 10,579 | 0,98 | x |
| Rohgas vor Kat | 18.09.91 | 08.30-14.30 | P 3.2 | 10,043 | 1,00 | x |
| Reingas nach Kat | 18.09.91 | 08.30-14.30 | P 4.2 | 10,804 | 1,00 | x |
| Rohgas vor Kat | 19.09.91 | 07.30-13.30 | P 3.3 | 10,542 | 0,89 | x |
| Reingas nach Kat | 19.09.91 | 07.30-13.30 | P 4.3 | 10,296 | 0,89 | x |

a betreiberseitige Probenahme
b Bezug: 0 °C, 1.013 hPa, trocken

Tab. 04: PCDF/D-Konzentration im $SiO_2$ (Nullprobe: P 1.3, oberste Schicht: P 2.1, Mischprobe: P 2.2)

| Probenbezeichnung | P 1.3 | P 2.1 | P 2.2 |
|---|---|---|---|
| PCDF/PCDD | ng/g | ng/g | ng/g |
| Summe TetraCDF | b | 3,52 | 0,22 |
| Summe PentaCDF | b | 5,63 | 0,41 |
| Summe HexaCDF | b | 8,16 | 0,64 |
| Summe HeptaCDF | 0,004 | 6,13 | 0,51 |
| OctaCDF | < 0,004 | 1,54 | < 0,11 |
| Summe Tetra- bis OctaCDF | 0,004 | 24,98 | 1,78 |
| 2378-TetraCDF* | < 0,0009 | 0,148 | 0,010 |
| 12378-/12348-PentaCDF[a] | < 0,0014 | 0,483 | 0,035 |
| 23478-PentaCDF* | < 0,0014 | 0,372 | 0,033 |
| 123478-/123479-HexaCDF[a] | < 0,0015 | 0,880 | 0,069 |
| 123678-HexaCDF* | < 0,0015 | 1,187 | 0,099 |
| 123789-HexaCDF | < 0,0015 | 0,070 | 0,004 |
| 234678-HexaCDF | < 0,0015 | 0,816 | 0,084 |
| 1234678-HeptaCDF | 0,0038 | 5,202 | 0,450 |
| 1234789-HeptaCDF | < 0,0009 | 0,123 | 0,010 |
| Summe TetraCDD | b | 0,14 | b |
| Summe PentaCDD | b | 0,49 | 0,03 |
| Summe HexaCDD | b | 0,70 | 0,05 |
| Summe HeptaCDD | b | 1,09 | 0,12 |
| OctaCDD | 0,008 | 1,45 | 0,18 |
| Summe Tetra- bis OctaCDD | 0,008 | 3,87 | 0,38 |
| 2378-TetraCDD* | < 0,0008 | 0,011 | < 0,001 |
| 12378-PentaCDD* | < 0,0011 | 0,062 | 0,006 |
| 123478-HexaCDD* | < 0,0023 | 0,041 | < 0,004 |
| 123678-HexaCDD* | < 0,0023 | 0,069 | < 0,004 |
| 123789-HexaCDD* | < 0,0023 | 0,043 | < 0,004 |
| 1234678-HeptaCDD | < 0,0035 | 0,506 | 0,062 |
| Summe Tetra- bis OctaCDF/D | 0,012 | 28,85 | 2,16 |
| Summe PCDF/D n. GefStoffV* | b | 1,933 | 0,148 |
| TE (BGA 1984) | < 0,0001 | 0,635 | 0,050 |
| TE (NATO/CCMS 1988) | < 0,0001 | 0,639 | 0,053 |
| TE (NATO/CCMS incl. NWG) | 0,0036 | 0,639 | 0,056 |

Sofern nicht besonders erwähnt, sind bei den Summenwerten und Toxizitätsäquivalenten (TE) nicht nachgewiesene Kongenere oder Homologengruppen nicht berücksichtigt

a gaschromatographisch an SP-2331 nicht trennbare Kongenere

b nicht nachweisbar

Tab. 05

| 2378-TetraCDD-Toxizitätsäquivalent-Faktoren (TEF) nach einem Vorschlag des BGA, Berlin, und der NATO/CCMS | | |
|---|---|---|
| PCDF/D | BGA 1984 | NATO/CCMS 1988 |
| 2378-TetraCDD | 1,0 | 1,0 |
| 12378-PentaCDD | 0,1 | 0,5 |
| 123478-HexaCDD | 0,1 | 0,1 |
| 123678-HexaCDD | 0,1 | 0,1 |
| 123789-HexaCDD | 0,1 | 0,1 |
| 1234678-HeptaCDD | 0,01 | 0,01 |
| OctaCDD | 0,001 | 0,001 |
| 2378-TetraCDF | 0,1 | 0,1 |
| 12378-PentaCDF | 0,1 | 0,05 |
| 23478-PentaCDF | 0,1 | 0,5 |
| 123478-HexaCDF | 0,1 | 0,1 |
| 123678-HexaCDF | 0,1 | 0,1 |
| 123789-HexaCDF | 0,1 | 0,1 |
| 234678-HexaCDF | 0,1 | 0,1 |
| 1234678-HeptaCDF | 0,01 | 0,01 |
| 1234789-HeptaCDF | 0,01 | 0,01 |
| OctaCDF | 0,001 | 0,001 |
| Σ TetraCDD | 0,01 | 0 |
| Σ PentaCDD | 0,01 | 0 |
| Σ HexaCDD | 0,01 | 0 |
| Σ HeptaCDD | 0,001 | 0 |
| Σ TetraCDF | 0,01 | 0 |
| Σ PentaCDF | 0,01 | 0 |
| Σ HexaCDF | 0,01 | 0 |
| Σ HeptaCDF | 0,001 | 0 |

Der TE-Wert einer Probe errechnet sich, in dem die jeweilige Konzentration mit dem zugehörigen TEF multipliziert und die Produkte addiert werden. Zu beachten ist, daß die berechneten Summenwerte nicht die 2378-Cl-substituierten Kongenere der jeweiligen Homologengruppe enthalten.

Tab. 06: PCDF/D-Konzentration im Rohgas vor Katalysator (P 3.1-3);
Bezug: 0 °C, 1.013 hPa, trocken, normiert auf 11 % $O_2$

| Probenbezeichnung | P 3.1 | P 3.2 | P 3.3 |
|---|---|---|---|
| PCDF/PCDD | ng/m$^3$ | ng/m$^3$ | ng/m$^3$ |
| Summe TetraCDF | 58,3 | 42,0 | 50,3 |
| Summe PentaCDF | 56,1 | 47,1 | 49,7 |
| Summe HexaCDF | 27,5 | 27,0 | 37,0 |
| Summe HeptaCDF | 15,9 | 16,1 | 17,4 |
| OctaCDF | 3,6 | 4,9 | < 1,8 |
| Summe Tetra- bis OctaCDF | 161,4 | 137,1 | 154,4 |
| 2378-TetraCDF | 1,61 | 1,55 | 1,78 |
| 12378-/12348-PentaCDF[a] | 5,13 | 4,28 | 4,30 |
| 23478-PentaCDF | 2,21 | 2,38 | 2,84 |
| 123478-/123479-HexaCDF[a] | 3,21 | 3,22 | 4,45 |
| 123678-HexaCDF | 3,40 | 3,39 | 4,75 |
| 123789-HexaCDF | 0,23 | 0,29 | 0,30 |
| 234678-HexaCDF | 1,94 | 3,03 | 3,42 |
| 1234678-HeptaCDF | 12,57 | 12,07 | 14,13 |
| 1234789-HeptaCDF | 0,40 | 0,59 | 0,36 |
| Summe TetraCDD | 3,8 | 4,9 | 5,8 |
| Summe PentaCDD | 8,8 | 10,6 | 12,1 |
| Summe HexaCDD | 7,2 | 9,3 | 9,5 |
| Summe HeptaCDD | 9,2 | 8,8 | 10,0 |
| OctaCDD | 10,8 | 11,9 | 10,6 |
| Summe Tetra- bis OctaCDD | 39,8 | 45,5 | 48,0 |
| 2378-TetraCDD | 0,39 | 0,37 | 0,44 |
| 12378-PentaCDD | 1,19 | 1,21 | 1,61 |
| 123478-HexaCDD | 0,40 | 0,45 | 0,53 |
| 123678-HexaCDD | 0,67 | 0,84 | 0,87 |
| 123789-HexaCDD | 0,59 | 0,77 | 0,85 |
| 1234678-HeptaCDD | 4,45 | 4,49 | 4,89 |
| Summe Tetra- bis OctaCDF/D | 201,2 | 182,6 | 202,4 |
| TE (BGA 1984) | 4,05 | 3,90 | 4,61 |
| TE (NATO/CCMS 1988) | 3,74 | 3,92 | 4,78 |
| TE (NATO/CCMS incl. NWG) | 3,74 | 3,92 | 4,78 |

Sofern nicht besonders erwähnt, sind bei den Summenwerten und Toxizitätsäquivalenten (TE) nicht nachgewiesene Kongenere oder Homologengruppen nicht berücksichtigt
a gaschromatographisch an SP-2331 nicht trennbare Kongenere

Tab. 07: PCDF/D-Konzentration im Reingas nach Katalysator (P 4.1-3); Bezug: 0 °C, 1.013 hPa, trocken, normiert auf 11 % $O_2$

| Probenbezeichnung | P 4.1 | P 4.2 | P 4.3 |
|---|---|---|---|
| PCDF/PCDD | ng/$m^3$ | ng/$m^3$ | ng/$m^3$ |
| Summe TetraCDF | b | 0,07 | 0,03 |
| Summe PentaCDF | 0,05 | 0,07 | 0,03 |
| Summe HexaCDF | 0,15 | 0,17 | 0,10 |
| Summe HeptaCDF | 0,20 | 0,26 | 0,16 |
| OctaCDF | 0,32 | 0,36 | 0,09 |
| Summe Tetra- bis OctaCDF | 0,72 | 0,93 | 0,41 |
| 2378-TetraCDF | < 0,004 | 0,004 | 0,003 |
| 12378-/12348-PentaCDF[a] | 0,008 | 0,008 | 0,005 |
| 23478-PentaCDF | 0,008 | 0,007 | 0,004 |
| 123478-/123479-HexaCDF[a] | 0,028 | 0,021 | 0,014 |
| 123678-HexaCDF | 0,017 | 0,019 | 0,012 |
| 123789-HexaCDF | < 0,003 | < 0,007 | < 0,002 |
| 234678-HexaCDF | 0,037 | 0,042 | 0,027 |
| 1234678-HeptaCDF | 0,146 | 0,184 | 0,114 |
| 1234789-HeptaCDF | 0,007 | 0,016 | 0,009 |
| Summe TetraCDD | b | b | b |
| Summe PentaCDD | b | b | b |
| Summe HexaCDD | b | b | b |
| Summe HeptaCDD | 0,15 | 0,19 | 0,12 |
| OctaCDD | 0,68 | 0,84 | 0,52 |
| Summe Tetra- bis OctaCDD | 0,83 | 1,03 | 0,64 |
| 2378-TetraCDD | < 0,002 | < 0,003 | < 0,003 |
| 12378-PentaCDD | < 0,004 | < 0,005 | < 0,004 |
| 123478-HexaCDD | < 0,012 | < 0,005 | < 0,013 |
| 123678-HexaCDD | < 0,012 | < 0,005 | < 0,013 |
| 123789-HexaCDD | < 0,012 | < 0,005 | < 0,013 |
| 1234678-HeptaCDD | 0,088 | 0,108 | 0,073 |
| Summe Tetra- bis OctaCDF/D | 1,55 | 1,96 | 1,05 |
| TE (BGA 1984) | 0,014 | 0,017 | 0,010 |
| TE (NATO/CCMS 1988) | 0,016 | 0,017 | 0,010 |
| TE (NATO/CCMS incl. NWG) | 0,024 | 0,024 | 0,020 |

Sofern nicht besonders erwähnt, sind bei den Summenwerten und Toxizitätsäquivalenten (TE) nicht nachgewiesene Kongenere oder Homologengruppen nicht berücksichtigt

a gaschromatographisch an SP-2331 nicht trennbare Kongenere

b nicht nachweisbar

Tab. 08: PCDF/D-Zersetzungsraten nach Katalysator (P 4.1-3)

| Probenbezeichnung | P 4.1 | P 4.2 | P 4.3 |
|---|---|---|---|
| Abscheiderate | % | % | % |
| Summe TetraCDF | b | 99,83 | 99,94 |
| Summe PentaCDF | 99,91 | 99,85 | 99,94 |
| Summe HexaCDF | 99,46 | 99,37 | 99,73 |
| Summe HeptaCDF | 98,72 | 98,39 | 99,08 |
| OctaCDF | 91,11 | 92,65 | < 95,00 |
| Summe Tetra- bis OctaCDF | 99,56 | 99,32 | 99,73 |
| | | | |
| 2378-TetraCDF | > 99,75 | 99,74 | 99,83 |
| 12378-/12348-PentaCDF[a] | 99,84 | 99,81 | 99,88 |
| 23478-PentaCDF | 99,64 | 99,71 | 99,85 |
| 123478-/123479-HexaCDF[a] | 99,13 | 99,35 | 99,69 |
| 123678-HexaCDF | 99,50 | 99,44 | 99,75 |
| 123789-HexaCDF | > 98,70 | > 97,59 | > 99,33 |
| 234678-HexaCDF | 98,09 | 98,61 | 99,21 |
| 1234678-HeptaCDF | 98,84 | 98,48 | 99,19 |
| 1234789-HeptaCDF | 98,25 | 97,29 | 97,50 |
| | | | |
| Summe TetraCDD | b | b | b |
| Summe PentaCDD | b | b | b |
| Summe HexaCDD | b | b | b |
| Summe HeptaCDD | 98,37 | 97,84 | 98,80 |
| OctaCDD | 93,70 | 92,94 | 95,09 |
| Summe Tetra- bis OctaCDD | 97,91 | 97,74 | 98,67 |
| | | | |
| 2378-TetraCDD | > 99,49 | > 99,19 | > 99,32 |
| 12378-PentaCDD | > 99,66 | > 99,59 | > 99,75 |
| 123478-HexaCDD | > 97,00 | > 98,89 | > 97,55 |
| 123678-HexaCDD | > 98,21 | > 99,40 | > 98,51 |
| 123789-HexaCDD | > 97,97 | > 99,35 | > 98,47 |
| 1234678-HeptaCDD | 98,02 | 97,59 | 91,80 |
| | | | |
| Summe Tetra- bis OctaCDF/D | 99,23 | 98,93 | 99,48 |
| TE nach BGA/UBA 1984 | 99,65 | 99,93 | 99,78 |
| TE nach NATO/CCMS 1988 | 99,57 | 99,95 | 99,79 |
| TE (NATO/CCMS incl. NWG) | 99,36 | 99,89 | 99,58 |

Bei den Summenwerten und Toxizitätsäquivalenten (TE) sind nicht nachgewiesene Kongenere oder Homologengruppen nicht berücksichtigt.

a gaschromatographisch an SP-2331 nicht trennbare Kongenere

b nicht berechenbar

Tab. 09

| Prozentuale Gehalte der Einzelkomponenten bzw. Umsätze | | | | | |
|---|---|---|---|---|---|
| KOMPONENTEN | % EINGANG | % AUSGANG | OBERE SCHICHT % MAX AUF KAT. | IM MITTEL % MITTEL.% AUF KAT. | UMSATZ MITTEL. |
| SUM TETRA CDF | 100.00 | 0.07 | 4.21 | 0.26 | 99.67 |
| SUM PENTA CDF | 100.00 | 0.10 | 6.63 | 0.48 | 99.42 |
| SUM HEXA CDF | 100.00 | 0.46 | 16.05 | 1.26 | 98.28 |
| SUM HEPTA CDF | 100.00 | 1.26 | 22.34 | 1.86 | 96.89 |
| OCTA CDF | 100.00 | 9.06 | 32.61 | 0.00 | 90.94 |
| SUM TETRA-OCTA CDF | 100.00 | 0.45 | 9.93 | 0.71 | 98.84 |
| 2378 TETRA CDF | 100.00 | 0.14 | 5.39 | 0.36 | 99.49 |
| 12378/12348 PENTA CDF | 100.00 | 0.15 | 6.34 | 0.46 | 99.39 |
| 23478 PENTA CDF | 100.00 | 0.26 | 9.01 | 0.80 | 98.94 |
| 123478/123479 HEXA CDF | 100.00 | 0.58 | 14.56 | 1.14 | 98.28 |
| 123678 HEXA CDF | 100.00 | 1.74 | 18.51 | 1.54 | 96.71 |
| 123789 HEXA CDF | 100.00 | 0.00 | 15.37 | 0.88 | 99.12 |
| 234678 HEXA CDF | 100.00 | 1.26 | 17.51 | 1.80 | 96.93 |
| 1234678 HEPTA CDF | 100.00 | 1.15 | 24.15 | 2.09 | 96.77 |
| 1234789 HEPTA CDF | 100.00 | 2.37 | 16.40 | 1.33 | 96.30 |
| SUM TETRA CDD | 100.00 | 0.00 | 1.74 | 0.00 | 100.00 |
| SUM PENTA CDD | 100.00 | 0.00 | 2.80 | 0.17 | 99.83 |
| SUM HEXA CDD | 100.00 | 0.00 | 4.85 | 0.35 | 99.65 |
| SUM HEPTA CDD | 100.00 | 1.64 | 7.01 | 0.77 | 97.59 |
| OCTA CDD | 100.00 | 6.13 | 7.84 | 0.97 | 92.90 |
| SUM TETRA-OCTA CDD | 100.00 | 1.88 | 5.23 | 0.51 | 97.61 |
| 2378 TETRA CDD | 100.00 | 0.00 | 0.15 | 0.00 | 100.00 |
| 12378 PENTA CDD | 100.00 | 0.00 | 2.78 | 0.27 | 99.73 |
| 123478 HEXA CDD | 100.00 | 0.00 | 5.35 | 0.00 | 100.00 |
| 123678 HEXA CDD | 100.00 | 0.00 | 5.22 | 0.00 | 100.00 |
| 123789 HEXA CDD | 100.00 | 0.00 | 3.50 | 0.00 | 100.00 |
| 1234678 HEPTA CDD | 100.00 | 1.95 | 6.59 | 0.81 | 97.25 |
| SUM TETRA-OCTA CDF/D | 100.00 | 0.78 | 8.86 | 0.66 | 98.56 |

Es wurde festgestellt, daß bei einer Rohgaskonzentration von ca. 4,2 ng TE/m³ ca. 99,67 % der PCDD/F's aus dem Gas entfernt werden. Auf dem Katalysator werden ca. 0,7 % akkumuliert. Durchschnittlich 98,95 % werden oxidativ zerstört. Die Einzelkomponentenanalyse ergabe, daß bevorzugt die niederchlorierten (und damit giftigeren) Verbindungen bis $Cl_6$ oxidiert werden. Das sogenannte Seveso-Dioxin (2, 3, 7, 8 TCDD) wird vollständig zerstört. Es wird vermutet, daß für die Oxidationsreaktion der Restgehalt $SO_2$ des Rauchgases eine entscheidende Rolle spielt. Sehr wahrscheinlich wird dabei $SO_2$ mit $H_2O_2$ über die Stufe $H_2SO_4$ zu $H_2SO_5$ (Caro'sche-Säure) umgesetzt. Es wurde weiterhin festgestellt, daß sich auf dem Katalysator Schwefelsäure aufkonzentriert. Diese Schwefelsäure kann mit dem Wasserstoffperoxid Caro'sche-Säure bilden. Die Oxidationswirkung der Caro'schen-Säure ist wesentlich höher als die von Wasserstoffperoxid allein und sollte ausreichen, Dioxine zu zerstören.

Bei der Bestimmung der Meßwerte wurden die folgenden Meßmethoden angewandt:

$SO_2$ UV-Adsorption, Firma Rosemount, Binos-Serien

$NO_x$ Chemolumineszenz, Firma Rosemount, Typ 950 oder 951

Dioxine Für die Analyse der PCDF und PCDD vor dem Reaktor wurde das HRGC/LRMS-System (MSD) und für die Analyse nach dem Reaktor das System HRGC/HRMS eingesetzt. Die Probe wurde durch die XAD-z Kartuschen mit C-1234-Tetra CDD Standard genommen.

Tab. 10

| PCDD/PCDF-Abgasreinigung bei Abfallverbrennungsanlagen | | | | |
|---|---|---|---|---|
| Verbrennungsanlage | PCDD/PCDF-Abgasreinigung | PCDD/PCDF-Konzentration in ng TE/m³ | | Abgasmenge m³/h |
| | | Rohgas | Reingas | |
| Pilotanlagen | | | | |
| MVA Düsseldorf | Aktivkoks-Adsorber | 2,4 - 2,7[1)] | 0,022 - 0,025 | 2.000 |
| MVA Stapelfeld | Aktivkoks-Adsorber | 1,6 - 5,8[1)] | 0,026 - 0,079 | 100 |
| MVA Flözersteig | Aktivkoks-Adsorber | 0,6 - 1,0[1)] | 0,03 - 0,05 | 200 |
| SMVA Simmering | Aktivkoks-Adsorber | 1,0 - 9,3[1)] | 0,05 | 200 |
| Betriebsanlagen | | | | |
| SMVA Schöneiche | Trockenadditiv-Verfahren mit Aktivkoks-Zugabe | 0,34 - 1,74[2)] | 0,011 - 0,022 | 17.000 |
| MVA Neufahrn | Trockenadditiv-Verfahren[3)] | nicht gemessen | 0,09 | 18.000 |
| MVA Düsseldorf | Herdofenkoks/Aktivkoks-Adsorber | 1 - 5 [5)] | < 0,1 [4)] | 3 x 160.000 |
| RZR Herten | Herdofenkoks/Aktivkoks-Adsorber | 1 - 5 [5)] | < 0,1 [4)] | 70.000 |
| MVA = Müllverbrennungsanlage SMVA = Sondermüllverbrennungsanlage<br>Quelle:- Gesetzliche Vorschriften sowie Maßnahmen zur Begrenzung von Dioxin- und Furanbelastungen Prof. Dr. Ing. Michael Lange, VBA Berlin Vortrag VDI Tagung 17./18.09.1991, München | | | | |

1) gemessen hinter den Abscheidestufen für Staub, Halogene und Schwefeldioxid
2) nach Dampferzeuger
3) ohne besondere Maßnahmen zur PCDD/PCDF-Abgasreinigung
4) Auslegungswert
5) nach Elektrofilter

Das erfindungsgemäße Verfahren wird in Figur 1 erläutert. Im einzelnen bedeuten:

| | |
|---|---|
| 1 | Saugzug der MVA - Heusenstamm nach der Rauchgaswäsche |
| 2 | Kondensator zur Absenkung des Wasserdampfgehaltes |
| 3 | Kondensatablaß |
| 4 | Kondensatablaß |
| 5 | Kondensatablaß |
| 6 | Heizer elektrisch |
| 7 | Festbettreaktor aus Glas |
| 8 | Kondensatablaß |
| 9 | Kondensatablaß |
| 10 | Kondensatablaß |
| 11 | Wäscherüberlauf ($HNO_3$) |
| 12 | Füllkörperwäscher |
| 13 | Pumpe für Wäscherkreislauf |
| Ⓟ | Druckmessung |

**Patentansprüche**

1. Verfahren zum Entfernen von halogenierten organischen Verbindungen aus gegebenenfalls $NO_x$ enthaltenden Abgasen, dadurch gekennzeichnet, daß man das Abgas über ein Festbett oder ein Wirbelbett eines Feststoffs leitet und mit Caro'scher Säure $H_2SO_5$ oder einem ihrer Salze in Kontakt bringt.

2. Verfahren nach Anspruch 1, dadurch gekennzeichnet, daß man das Abgas gegebenenfalls mit $SO_2$ ergänzt, über ein Festbett oder ein Wirbelbett eines Feststoffes leitet und mit $H_2O_2$ in Kontakt bringt, wobei Caro'sche Säure in situ erzeugt wird.

3. Verfahren nach Anspruch 1, dadurch gekennzeichnet, daß man das Abgas über ein Festbett oder ein Wirbelbett eines Feststoffes leitet und dabei ein Gemisch aus $H_2O_2$ und $H_2SO_4$ auf den Feststoff aufdüst.

4. Verfahren nach den Ansprüchen 1 oder 2, dadurch gekennzeichnet, daß man den Feststoff vor Einbindung in den Abgasstrom mit $H_2SO_4$ imprägniert und $H_2O_2$ aufbringt.

5. Verfahren nach den Ansprüchen 1 oder 2, dadurch gekennzeichnet, daß man den Feststoff vor Einbindung in den Abgasstrom mit $H_2O_2$ imprägniert und $H_2SO_4$ aufbringt.

6. Verfahren nach Anspruch 1, dadurch gekennzeichnet, daß man den Feststoff vor der Einbindung in den Abgasstrom mit Caro'scher Säure oder mit einer wäßrigen Lösung ihre Salzes imprägniert.

7. Verfahren nach Anspruch 1, dadurch gekennzeichnet, daß man den Feststoff vor der Einbindung in den Abgasstrom mit Caro'scher Säure oder mit einer wäßrigen Lösung ihres Salzes besprüht.

**Claims**

1. A process for the removal of halogenated organic compounds from waste gases optionally containing $NO_x$, characterized in that the waste gas is led over a fixed bed or a fluidized bed of a solid and contacted with Caro's acid $H_2SO_5$ or one of its salts.

2. A process according to claim 1, characterized in that the waste gas is optionally supplemented with $SO_2$, led over a fixed bed or a fluidized bed of a solid and contacted with $H_2O_2$, whereby Caro's acid is produced in situ.

3. A process according to claim 1, characterized in that the waste gas is led over a fixed bed or a fluidized bed of a solid and at the same time a mixture of $H_2O_2$ and $H_2SO_4$ is sprayed onto the solid.

4. A process according to claim 1 or 2, characterized in that before the solid is introduced into the waste gas stream it is impregnated with $H_2SO_4$ and $H_2O_2$ is applied.

5. A process according to claim 1 or 2, characterized in that before the solid is introduced into the waste gas stream it is impregnated with $H_2O_2$ and $H_2SO_4$ is applied.

6. A process according to claim 1, characterized in that before the solid is introduced into the waste gas stream it is impregnated with Caro's acid or with an aqueous solution of its salt.

7. A process according to claim 1, characterized in that before the solid is introduced into the waste gas stream it is sprayed with Caro's acid or with an aqueous solution of its salt.

**Revendications**

1. Procédé pour l'élimination de composés organiques halogénés de gaz de fumée contenant le cas échéant $NO_x$, caractérisé en ce que l'on conduit le gaz de fumée sur un lit fixe ou sur un lit fluidisé d'une matière solide et que l'on met ce dernier en contact avec l'acide de Caro ($SO_5H_2$) ou un de ses sels.

2. Procédé selon la revendication 1, caractérisé en ce que l'on conduit le gaz de fumée éventuellement complété avec $SO_2$, sur un lit fixe ou un lit fluidisé d'une matière solide et que l'on met en contact avec $H_2O_2$, l'acide de Caro étant produit « in situ ».

3. Procédé selon la revendication 1, caractérisé en ce que l'on conduit le gaz de fumée sur un lit fixe ou sur un lit fluidisé, d'une substance solide et de cette façon on injecte un mélange à base de $H_2O_2$ et de $SO_4H_2$ sur la matière solide.

4. Procédé selon les revendications 1 et 2, caractérisé en ce que l'on imprègne la matière solide avant sa liaison dans le courant de gaz de fumée avec $SO_4H_2$ et qu'on applique $H_2O_2$.

5. Procédé selon les revendications 1 ou 2, caractérisé en ce que l'on imprègne la matière solide avant sa liaison dans le courant de gaz de fumée avec $H_2O_2$ et qu'on applique $SO_4H_2$.

6. Procédé selon la revendication 1, caractérisé en ce que l'on imprègne la matière solide avant sa liaison dans le courant de gaz de fumée avec l'acide de Caro ou avec une solution aqueuse de son sel.

7. Procédé selon la revendication 1, caractérisé en ce que l'on pulvérise la matière solide avant sa liaison dans le courant de gaz de fumée avec l'acide de Caro ou avec une solution aqueuse de son sel.

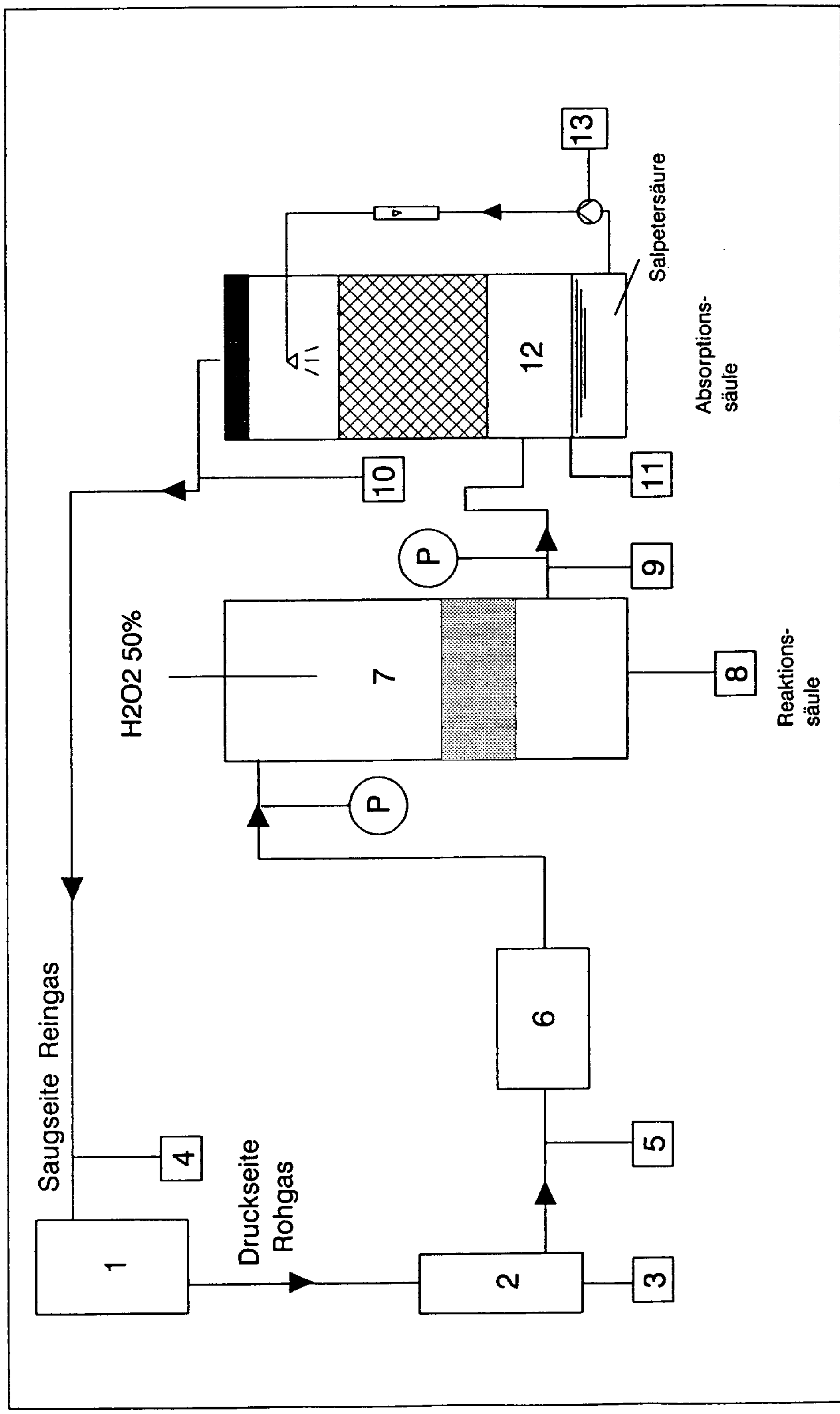


Entstickung mit Wasserstoffperoxid

FIGUR 1